# EUROPÄISCHE PATENTANMELDUNG

(11) **EP 3 269 238 A1**
(43) Veröffentlichungstag der Anmeldung: **17.01.2018**
(21) Anmeldenummer: 16178766.8
(22) Anmeldetag: 11.07.2016
(51) Int. Cl.: A01M 7/00

(54) **SPRÜHGERÄT MIT DURCHFLUSSMESSUNG**

(71) Anmelder: Bayer CropScience AG, 40789 Monheim am Rhein (DE)
(72) Erfinder: GUTSMANN, Volker, 40764 Langenfeld (DE)
(74) Vertreter: BIP Patents

(57) **Zusammenfassung**

Die vorliegende Erfindung betrifft die Applikation von flüssigen Wirkstoffen mit Hilfe eines tragbaren Sprühgeräts. Gegenstand der vorliegenden Erfindung ist eine tragbare Vorrichtung zur Applikation von Wirkstoffen sowie ein Verfahren zur Applikation von Wirkstoffen mit Hilfe eines tragbaren Sprühgeräts.

## Beschreibung

Die vorliegende Erfindung betrifft die Applikation von flüssigen Wirkstoffen mit Hilfe eines tragbaren Sprühgeräts. Gegenstand der vorliegenden Erfindung ist eine tragbare Vorrichtung zur Applikation von Wirkstoffen sowie ein Verfahren zur Applikation von Wirkstoffen mit Hilfe eines tragbaren Sprühgeräts.

Tragbare Sprühgeräte zum Applizieren von Wirkstoffen wie Pestiziden, Insektiziden, Herbiziden und Fungiziden sind bekannt.

Weit verbreitet sind dabei Sprühgeräte, die als Kompressionssprüher bezeichnet werden. Sie umfassen einen Tank zur Aufnahme der zu versprühenden Flüssigkeit. Eine meist von Hand zu betätigende Luftdruckpumpe, die einen Teil des Tanks bildet, enthält einen üblichen Kolbenstangenaufbau und einen Betätigungshandgriff dafür. Diese Luftdruckpumpe wird verwendet, um über der zu versprühenden Flüssigkeit einen Luftdruck zu erzeugen. Das Unterdrucksetzen des Tanks wird dadurch bewirk, dass die Bedienperson die Pumpe periodisch betätigt bis ein gewünschter Tankdruck erreicht ist. Die Sprühflüssigkeit tritt aufgrund des Luftdrucks, der auf sie ausgeübt wird, durch ein in die Flüssigkeit im Tank eintauchendes Rohr aus und strömte dann durch einen Schlauch, ein Sprühstrahlventil am äußeren Ende des Schlauches, ein Verlängerungsrohr und schließlich durch eine Sprühdüse hindurch zu dem ausgewählten Zielbereich.

Nachteilig an einem solchen Sprühgerät ist, dass der Austreibdruck durch die manuell betriebene Luftpumpe nicht konstant gehalten werden kann. Das Ergebnis ist ein sich mit der Flussgeschwindigkeit änderndes Sprühmuster. Dementsprechend kann der Wirkstoff nur ungenau dosiert werden.

Eine elektrisch betriebene Luftpumpe kann hier Abhilfe schaffen, aber für eine gezielte, genaue und gleichmäßige Applikation des Wirkstoffs ist es erforderlich, dass der Druck im Tank konstant gehalten wird. Zudem muss der Tank druckstabil sein. Meistens sind solche Tanks daher aus Metall oder dickwandigem Kunststoff gefertigt. Die Tanks sind entsprechend schwer und unhandlich.

Pestizide, Insektizide, Herbizide und Fungizide werden heute zunehmend in Form von Konzentraten auf den Markt gebracht. Konzentrate haben den Vorteil geringerer Transportkosten. Der Anwender muss den Wirkstoff vor Verwendung verdünnen. Die Verdünnungsvorschiften finden sich gewöhnlich auf der Verpackung oder einem Beipackzettel.

Eine vom Anwender vorgenommene Verdünnung ist jedoch aus folgenden Gründen nachteilig:
Der Anwender kann in unerwünschten Kontakt mit dem Wirkstoff kommen. Es ist denkbar, dass sich der Anwender bei der Berechnung der Mengen an Konzentrat und Verdünnungsmittel vertut. Eine hohe Viskosität des Konzentrats kann zu eine ungenauen volumetrischen Abmessung der erforderlichen Menge führen.

Eine ungenaue Dosierung von Wirkstoffen kann eine Reihe von ungewollten Folgen haben. Die Behandlung des besprühten Objekts kann wirkungslos sein oder es kann zu einer Überdosierung kommen. Es ist denkbar, dass behördliche Vorschiften über abgegebene Mengen nicht eingehalten werden. Es ist denkbar, dass Fehler in der Bestandsüberwachung auftreten, da die abgegebenen Mengen falsch berechnet wurden.

Ein weiterer Nachteil des oben beschriebenen Sprühgeräts besteht darin, dass der Tank bei Verwendung eines anderen Wirkstoffs zunächst gereinigt werden muss. Ggf. muss die Reinigungsflüssigkeit entsorgt werden.

Ausgehend vom beschriebenen Stand der Technik bestand die Aufgabe darin, eine Vorrichtung zur Applikation von Wirkstoffen bereitzustellen, die einfach in der Handhabung ist, bei der keine manuelle Verdünnung von Konzentraten erforderlich ist, die eine genau definierbare Menge an Wirkstoff abgibt, die bequem zu transportieren und vom Anwender zu tragen und zu transportieren ist, bei der keine aufwändige Reinigung erforderlich ist, und die vielseitig eingesetzt werden kann.

Erfindungsgemäß wird diese Aufgabe durch den Gegenstand der unabhängigen Ansprüche 1 und 9 erfüllt. Bevorzugte Ausführungsformen finden sich in den abhängigen Ansprüchen sowie in der Beschreibung.

Ein erster Gegenstand der vorliegenden Erfindung ist damit ein transportables Sprühgerät, umfassend
- einen ersten Behälter zur Aufnahme einer ersten Flüssigkeit,
- Mittel zum Anschluss eines zweiten Behälters mit einer zweiten Flüssigkeit an das Sprühgerät,
- eine Sprühdüse,
- Mittel zur Förderung der ersten und der zweiten Flüssigkeit aus ihren Behältern in Richtung Sprühdüse,
- einen Durchflussmesser zur Messung des Flusses der ersten Flüssigkeit aus dem ersten Behälter in Richtung der Sprühdüse,
- und eine Kontrolleinheit,
dadurch gekennzeichnet, dass die Kontrolleinheit den Fluss der zweiten Flüssigkeit in Richtung der Sprühdüse auf Basis des gemessenen Flusses der ersten Flüssigkeit regelt.

Ein weiterer Gegenstand der vorliegenden Erfindung ist ein Verfahren zur Applikation einer Mischung aus einer ersten und einer zweiten Flüssigkeit mittels eines tragbaren Sprühgeräts umfassend einen ersten Behälter, eine Sprühdüse und ein Ventil auf ein Zielobjekt, wobei das Verfahren die folgenden Schritte umfasst:
- Füllen des ersten Behälters mit der ersten Flüssigkeit,
- Anschließen eines zweiten Behälters mit der zweiten Flüssigkeit an das Sprühgerät,
- Richten der Sprühdüse auf das Zielobjekt,
- Öffnen des Ventils, und
- Applizieren der Mischung,
wobei bei Öffnen des Ventils die erste Flüssigkeit aus dem ersten Behälter in Richtung Sprühdüse gefördert wird, der Fluss der ersten Flüssigkeit mittels eines Durchflussmesser gemessen und an eine Kontrolleinheit übertragen wird, die Kontrolleinheit den Fluss der zweiten Flüssigkeit aus dem zweiten Behälter in Richtung der Sprühdüse regelt, so dass die erste und die zweite Flüssigkeit in einem konstanten Mischungsverhältnis durch die Sprühdüse treten.

Erfindungsgemäß erfolgt die Mischung der ersten und der zweiten Flüssigkeit automatisch - eine manuelle Mischung durch einen Benutzer ist nicht erforderlich. Die erste und die zweite Flüssigkeit werden in separaten Behälter vorgehalten und werden erst unmittelbar vor der Applikation auf das Zielobjekt zusammengeführt. Dadurch können eventuelle Fehler des Anwenders beim Herstellen der Mischung und eine versehentliche Kontamination des Anwenders mit den Flüssigkeiten vermieden werden.

Beide Flüssigkeiten werden in Richtung Sprühdüse gefördert. Sie verlassen das Sprühgerät durch die Sprühdüse gemeinsam als Mischung. Das Mischungsverhältnis wird automatisch anhand des Flusses der ersten Flüssigkeit geregelt. Dazu misst ein Durchflussmesser den Fluss der ersten Flüssigkeit aus dem ersten Behälter in Richtung Sprühdüse und übermittelt ihn an die Kontrolleinheit. Die Kontrolleinheit regelt dann anhand dieses Flusses den Fluss der zweiten Flüssigkeit in Richtung Sprühdüse. Sinkt beispielsweise der Fluss der ersten Flüssigkeit, wird der Fluss der zweiten Flüssigkeit verringert, so dass das Mischungsverhältnis konstant bleibt. Steigt der Fluss der ersten Flüssigkeit, wird der Fluss der zweiten Flüssigkeit entsprechend erhöht.

Der zweite Behälter mit der zweiten Flüssigkeit ist als austauschbarer Behälter ausgeführt, so dass verschiedene Flüssigkeiten mit dem erfindungsgemäßen Sprühgerät verwendet werden können. Dadurch ist das Sprühgerät vielfältig einsetzbar.

Die einzelnen Elemente, die das erfindungsgemäße Sprühgerät und das erfindungsgemäße Verfahren kennzeichnen, werden nachfolgende näher erläutert. Bei dieser Erläuterung wird nicht zwischen Sprühgerät und Verfahren unterschieden. Stattdessen gelten die nachfolgenden Beschreibungen für alle Erfindungsgegenstände in analoger Weise, unabhängig davon in welchem Kontext sie stehen.

Das erfindungsgemäße Sprühgerät ist transportabel. Unter transportabel wird verstanden, dass das Gerät von einem Menschen ohne maschinelle Hilfsmittel von einem Ort zu einem anderen Ort gebracht werden kann.
In einer Ausführungsform ist das Sprühgerät so ausgeführt, dass der Benutzer beim Transport einen Teil des Sprühgeräts, der den ersten Behälter umfasst, in der einen Hand trägt, und einen anderen Teil des Sprühgeräts, der die Sprühdüse umfasst, in der anderen.
Vorzugsweise ist das Gerät so ausgeführt, dass der Benutzer einen Teil des Sprühgeräts, der den ersten Flüssigkeitsbehälter umfasst, auf dem Rücken tragen und transportieren kann. Einen anderen Teil, der die Sprühdüse umfasst, wird nach wie vor mit einer Hand getragen, aber die zweite Hand ist nun frei. Dazu ist das Gerät mit entsprechenden Gurten ausgestattet.

Das Sprühgerät ist mit einem ersten Behälter zur Aufnahme einer ersten Flüssigkeit ausgestattet.
Der Begriff "Flüssigkeit" soll hier auch Lösungen, Emulsionen und Suspensionen erfassen.
Bei der ersten Flüssigkeit handelt es sich vorzugsweise um ein Verdünnungsmittel. Das Verdünnungsmittel wird eingesetzt, um die zweite Flüssigkeit, die sich in dem zweiten Behälter befindet, zu verdünnen.
In einer bevorzugten Ausführungsform handelt es sich bei dem Verdünnungsmittel um Wasser.

Der erste Behälter weist vorzugsweise eine Öffnung auf, die mit einem wiederverschließbaren Verschluss verschlossen werden kann. Über diese Öffnung kann der erste Behälter mit der ersten Flüssigkeit befüllt werden.

Der erste Behälter kann aus einem beliebigen Material bestehen, das mit der ersten Flüssigkeit kompatibel ist. Der Begriff "kompatibel" bedeutet, dass das Material durch die erste Flüssigkeit nicht chemisch angegriffen werden sollte und dass das Material für die erste Flüssigkeit undurchlässig sein sollte.

Je nach eingesetztem Mittel zur Förderung der ersten Flüssigkeit aus dem ersten Behälter in Richtung Sprühdüse muss der erste Behälter einem Überdruck standhalten oder er kann drucklos betrieben werden. In einer Ausführungsform der vorliegenden Erfindung ist der erste Behälter ein Drucktank, der mit einem Druck beaufschlagt werden kann, um die erste Flüssigkeit mittels Druck aus dem ersten Behälter in Richtung Sprühdüse zu fördern.
In einer bevorzugten Ausführungsform wird der erste Behälter drucklos betrieben. Dadurch, dass der Behälter keinem Überdruck standhalten muss, kann er aus dünnwandigerem und leichterem Material gefertigt werden.
In einer ganz besonders bevorzugten Ausführungsform ist der erste Behälter als flexibler Beutel ausgeführt. Ein solcher Beutel weist vorzugsweise Gurte auf, damit er wie ein Rucksack auf den Rücken geschnallt und getragen werden kann.

Das erfindungsgemäße Sprühgerät weist ferner Mittel zum Anschluss eines zweiten Behälters mit einer zweiten Flüssigkeit an das Sprühgerät auf. Wie bereits oben erwähnt, handelt es sich bei der zweiten Flüssigkeit vorzugsweise um ein Konzentrat, das mittels des Verdünnungsmittels verdünnt werden soll. Vorzugsweise handelt es sich bei der zweiten Flüssigkeit um eine Wirkstoffformulierung, die vorzugsweise ein Pestizid, Insektizid, Herbizid oder Fungizid umfasst. In einer besonders bevorzugten Ausführungsform handelt es sich um ein Pestizid-Konzentrat.

Erfindungsgemäß ist der zweite Flüssigkeitsbehälter austauschbar, das bedeutet, man kann einen mit der zweiten Flüssigkeit befüllten Behälter reversibel an das Sprühgerät anschließen. Er wird vorzugsweise dann wieder entfernt und ggf. durch einen anderen Behälter ersetzt, wenn er entleert worden ist.
Mittel zum reversiblen Anschließen eines Behälters sind hinreichend bekannt. Bei den Mitteln zum Anschließen des Behälters kann es sich beispielsweise um eine Schraub- oder Bajonettverbindung handeln. Dabei befinden sich zueinander kompatible Verbindungsmittel am Sprühgerät und am zweiten Behälter.
Der zweite Behälter ist so ausgeführt, dass er zur zweiten Flüssigkeit kompatibel ist - er ist für die zweite Flüssigkeit also undurchlässig und wird durch die zweite Flüssigkeit nicht chemisch angegriffen.
Der zweite Behälter kann als Einweg- oder Mehrwegbehälter ausgeführt sein, d.h. er ist entweder wieder einsetzbar oder er wird nicht wiederverwendet.
Vorzugsweise ist der zweite Behälter zumindest teilweise aus Kunststoff ausgeführt. Kunststoffe sind dafür bekannt, dass sie vielen Stoffen gegenüber chemisch inert sind. Sie sind zudem leicht, lassen sich gut verarbeiten und in nahezu beliebige Formen bringen.

In einer bevorzugten Ausführungsform der vorliegenden Erfindung weist der zweite Behälter Mittel auf, die eine Kommunikation mit der Kontrolleinheit des Sprühgeräts erlauben. In einer bevorzugten Ausführungsform erlauben es diese Mittel der Kontrolleinheit, ein Mischungsverhältnis zu ermitteln. Denkbar ist beispielsweise, dass die Mittel zum Anschluss des zweiten Behälters an das Sprühgerät über elektrische Kontakte verfügen, die beim Anschluss des zweiten Behälters einen elektrischen Kontakt zwischen Sprühgerät und Kontrolleinheit herstellen, über den eine elektronische Kommunikation zwischen Kontrolleinheit und zweitem Behälter ermöglicht wird. Der zweite Behälter kann beispielsweise einen elektronischen Speicher umfassen, der über den hergestellten Kontakt von der Kontrolleinheit ausgelesen werden kann. In diesem Speicher können Informationen über die im zweiten Behälter vorhandene Flüssigkeit gespeichert sein. Insbesondere kann dort ein Verdünnungsgrad abgelegt sein, d.h. Informationen darüber, in welchem Verhältnis die erste und die zweite Flüssigkeit miteinander gemischt werden sollen.
Handelt es sich bei der zweiten Flüssigkeit um ein Konzentrat, das vor der Applikation mit einem Verdünnungsmittel verdünnt werden muss, so sollte der einzustellende Verdünnungsgrad an oder auf dem Behälter vermerkt und/oder gespeichert sein. In der beschriebenen bevorzugten Ausführungsform ist der einzustellende Verdünnungsgrad in einer Form gespeichert, in der er von der Kontrolleinheit ermittelt werden kann. Dies kann wie beschrieben über eine elektronische Kommunikation erfolgen. Neben der beschriebenen kontaktbehafteten Kommunikation ist natürlich auch eine kontaktlose Kommunikation möglich, d.h. über elektromagnetische Wellen (Bluetooth, Nahfeld-Kommunikation, u.a.).
Des Weiteren verfügt das erfindungsgemäße Sprühgerät über eine Sprühdüse. Über die Sprühdüse wird eine Mischung aus der ersten und der zweiten Flüssigkeit auf ein Zielobjekt abgegeben. Über die Sprühdüse kann eine gewünschte räumliche Verteilung der applizierten Mischung erreicht werden. Üblicherweise verwandelt die Sprühdüse die Flüssigkeit, die durch sie hindurchtritt, in Tropfen mit einer spezifischen Tropfengrößenverteilung, die unter anderem vom Druck der Flüssigkeit, von der Fließgeschwindigkeit der Flüssigkeit und der Geometrie der Sprühdüse abhängt.
Vorzugsweise ist die Sprühdüse austauschbar, so dass ein Anwender eine an die Applikation und das Zielobjekt angepasste Sprühdüse mit einer gewünschten Tropfengrößenverteilung und räumlichen Verteilung des Sprühguts auswählen kann.
Die Sprühdüse kann beispielsweise lanzenförmig oder pistolenförmig sein oder ein andere Form aufweisen. Vorzugsweise ist sie so ausgeführt, dass sie vom Benutzer mit einer Hand gehalten und auf das Zielobjekt gerichtet werden kann.

In einer bevorzugten Ausführungsform weisen die auswechselbare Sprühdüse und die Kontrolleinheit Mittel auf, die es der Kontrolleinheit ermöglichen, die Anwesenheit einer Sprühdüse und/oder die Art der anwesenden Sprühdüse zu erkennen. Es ist zum Beispiel denkbar, dass die Kontrolleinheit nur dann die Förderung der Flüssigkeiten aus ihren Behältern in Richtung Sprühdüse einleitet, wenn auch eine Sprühdüse angeschlossen ist. Ist keine Sprühdüse angeschlossen, erfolgt aus z.B. Sicherheitsgründen keine Förderung. Weiterhin ist denkbar, dass die Kontrolleinheit die Parameter zur Förderung der Flüssigkeiten an die Art der vorhandenen Sprühdüse anpasst, um ein optimales Sprühergebnis zu ermöglichen. Es ist denkbar, dass eine Sprühdüse einen Mindestdruck der ankommenden Flüssigkeit benötigt, um eine gewünschte räumliche Verteilung der Sprühflüssigkeit zu erzeugen. Dieser Mindestdruck könnte an der Sprühdüse in einer Weise codiert sein, die von der Kontrolleinheit gelesen werden kann, so dass der Benutzer derartige Parameter nicht manuell einstellen muss.

Vor der Sprühdüse ist vorzugsweise ein Ventil angebracht. Vorzugsweise kann dieses Ventil manuell betätigt werden, so dass der Benutzer die Sprühdüse auf das Zielobjekt richten und durch manuelles Öffnen des Ventils den Sprühvorgang starten kann.
Denkbar ist auch, dass das Ventil automatisch geöffnet wird. Denkbar ist zum Beispiel, dass das Sprühgerät über einen Sensor verfügt, der die Lage der Sprühdüse im Raum erkennt und bei einer bestimmten Lage das Ventil automatisch öffnet oder schließt. Denkbar ist zum Beispiel, dass das Ventil geschlossen ist, wenn die Sprühdüse zum Boden gerichtet ist und geöffnet wird, wenn die Sprühdüse in die Waagerechte gehoben wird.
Denkbar ist auch, dass das Ventil automatisch geöffnet wird, wenn sich die Sprühdüse dem Zielobjekt nähert. Dies kann beispielsweise mittels Sensoren oder GPS-gestützt erfolgen.

Das erfindungsgemäße Sprühgerät weist ferner Mittel zum Befördern der ersten Flüssigkeit aus dem ersten Behälter in Richtung Sprühdüse auf. Es ist denkbar, dass der erste Behälter mit Druck beaufschlagt werden kann, mit dem die erste Flüssigkeit aus dem ersten Behälter durch Zuleitungen zur Sprühdüse gedrückt wird.
Vorzugsweise umfassen die Mittel zum Befördern der ersten Flüssigkeit aus dem ersten Behälter in Richtung Sprühdüse eine elektrische Pumpe. Eine Pumpe hat gegenüber einem mit Druck beaufschlagten ersten Behälter den Vorteil, dass der erste Behälter nicht druckfest konstruiert sein muss. Der erste Behälter kann prinzipiell sogar offen sein.

Das erfindungsgemäße Sprühgerät weist einen Durchflussmesser zur Messung des Flusses der ersten Flüssigkeit aus dem ersten Behälter in Richtung der Sprühdüse auf. Mit einem solchen Durchflussmesser wird die pro Zeiteinheit in Richtung Sprühdüse fließende Flüssigkeitsmenge erfasst. Unter Flüssigkeitsmenge wird je nach verwendetem Messverfahren das Volumen oder die Masse verstanden.
Der Durchflussmesser ist vorzugsweise einer, der üblicherweise in geschlossenen Rohrleitungen eingesetzt wird, wie beispielsweise ein magnetisch-induktiver Durchflussmesser, ein Schwebekörper-Durchflussmesser, ein Ultraschall-Durchflussmesser, ein Coriolis-Massendurchflussmesser, ein kalorimetrischer Durchflussmesser oder ein Vortex-Durchflussmesser. Denkbar ist aber auch die Verwendung einer Messblende oder eine Staudrucksonde.
In einer bevorzugten Ausführungsform wird die Durchflussmessung mit Hilfe eines Differenzdrucksensors vorgenommen.
Details zur Durchflussmessung können beispielsweise dem folgenden Lehrbuch entnommen werden: K.W. Bonfig: Technische Durchflussmessung, Vulkan-Verlag Essen, 3. Auflage, 2002, ISBN 3-8027-2190-X.
Anhand der Flüssigkeitsmenge der in Richtung Sprühdüse fließenden ersten Flüssigkeit regelt die Kontrolleinheit den Fluss der zweiten Flüssigkeit aus dem zweiten Behälter in Richtung Sprühdüse.

Das erfindungsgemäße Sprühgerät umfasst Mittel zum Befördern der zweiten Flüssigkeit aus dem zweiten Behälter in Richtung Sprühdüse. Vorzugsweise handelt es sich hierbei um eine elektrische Pumpe, die in einer Kommunikationsverbindung mit der Kontrolleinheit steht.

Die erste und die zweite Flüssigkeit verlassen das Sprühgerät gemeinsam als Mischung durch die Sprühdüse. Es ist denkbar, dass die erste Flüssigkeit und die zweite Flüssigkeit unmittelbar vor der Sprühdüse in einer entsprechenden Zuleitung zusammengeführt werden. Ebenso ist es aber auch denkbar, dass vor der Sprühdüse eine Mischkammer existiert, in welche die erste und die zweite Flüssigkeit über zwei separate Zuleitungen eingebracht werden. In der Mischkammer kommt es dann zu einer Durchmischung der ersten und der zweiten Flüssigkeit bevor die Mischung dann in die Sprühdüse eintritt.
Die Durchmischung der ersten und der zweiten Flüssigkeit kann durch geeignete Maßnahmen gefördert werden, beispielsweise durch statische Mischelemente.

Das erfindungsgemäße Sprühgerät weist eine Kontrolleinheit auf. Diese Kontrolleinheit sorgt für eine Regelung der Menge der zweiten Flüssigkeit aus dem zweiten Behälter in Richtung Sprühdüse. Diese Regelung erfolgt erfindungsgemäß auf Basis des mittels des Durchflussmessers gemessenen Flusses der ersten Flüssigkeit aus dem ersten Behälter in Richtung Sprühdüse. Ein weiterer Parameter, der in die Regelung einfließt, ist das einzustellende Mischungsverhältnis. Dieses wird entweder vom Benutzer vorgegeben, indem dieser das Mischungsverhältnis in die Kontrolleinheit eingibt, oder die Kontrolleinheit erfasst das Mischungsverhältnis durch eine Kommunikation mit dem zweiten Behälter.
Wie oben beschrieben, ist die Kontrolleinheit in einer bevorzugten Ausführungsform der vorliegenden Erfindung mit dem auswechselbaren zweiten Behälter in der Weise verbunden, dass die Kontrolleinheit von dem auswechselbaren zweiten Behälter einen einzustellenden Verdünnungsgrad für das im auswechselbaren zweiten Behälter enthaltende Konzentrat empfangen kann.
In einer weiteren bevorzugten Ausführungsform erfasst der Kontrolleinheit die Menge an applizierter zweiter Flüssigkeit und speichert diesen Wert und überträgt diesen Wert zu einem vom Benutzer definierbaren Zeitpunkt an ein externes Computersystem. Auf diese Weise kann die Menge an applizierter zweiter Flüssigkeit nachgehalten werden.
In einer bevorzugten Ausführungsform wird zu der Menge der jeweils applizierten zweiten Flüssigkeit auch die Position (die GPS-gestützt ermittelt werden kann) der Applikation erfasst.
In einer weiteren bevorzugten Ausführungsform wird anhand der applizierten Menge an zweiter Flüssigkeit die Restmenge an zweiter Flüssigkeit im zweiten Behälter ermittelt. Vorzugsweise wird der Wert für diese Restmenge in eine Speichereinheit im Sprühgerät und/oder am zweiten Behälter gespeichert.

In einer bevorzugten Ausführungsform weist das erfindungsgemäße Sprühgerät einen Drucksensor auf, der den Druck in der Zuleitung zur Sprühdüse misst.
Werden die erste und die zweite Flüssigkeit in Richtung Sprühdüse gefördert, baut sich vor der Sprühdüse ein Druck auf. Die Höhe des Drucks richtet sich unter anderem nach der Geometrie der Sprühdüse. Es ist denkbar, dass eine Sprühdüse einen Druck benötigt, der innerhalb eines definierten Druckbereichs liegen muss, um ein für die Applikation geeignetes Sprühprofil zu erzeugen.
Daher ist der Drucksensor vorzugsweise mit der Kontrolleinheit verbunden, die den Fluss der ersten und der zweiten Flüssigkeit so regelt, dass der gemessene Druck innerhalb eines spezifizierten Bereichs liegt.

Die Erfindung wird nachfolgend anhand von Ausführungsbeispielen näher erläutert, ohne die Erfindung jedoch auf diese Beispiele beschränken zu wollen.

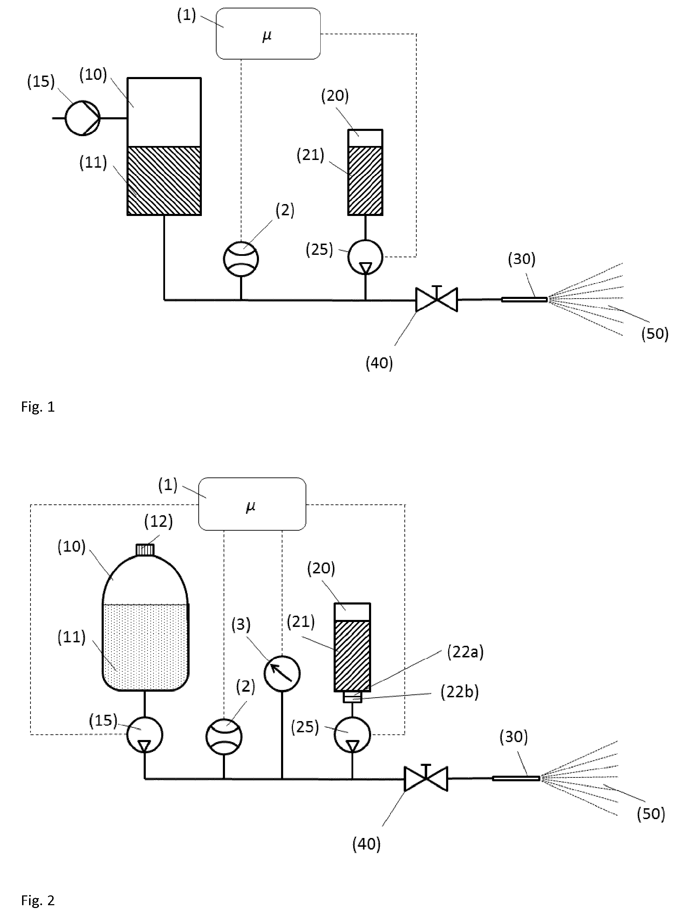

Figur 1 zeigt eine Ausführungsform des erfindungsgemäßen Sprühgeräts. Das Sprühgerät umfasst einen ersten Behälter (10) mit einer ersten Flüssigkeit (11), einen zweiten Behälter (20) mit einer zweiten Flüssigkeit (21), eine Sprühdüse (30), ein Ventil (40), Mittel (15) zur Förderung der ersten Flüssigkeit (11) aus dem ersten Behälter (10) in Richtung Sprühdüse (30), Mittel (25) zur Förderung der zweiten Flüssigkeit (21) aus dem zweiten Behälter (20) in Richtung Sprühdüse (30), einen Durchflussmesser (2) zur Messung des Flusses der der ersten Flüssigkeit (11) aus dem ersten Behälter (10) in Richtung Sprühdüse (30) und eine Kontrolleinheit (1).
Der erste Behälter (10) ist als druckfester geschlossener Behälter ausgeführt.
Bei den Mitteln (15) zur Förderung der ersten Flüssigkeit (11) aus dem ersten Behälter (10) handelt es sich in Fig. 1 um eine Luftpumpe, mit der ein Überdruck in dem ersten Behälter (10) gegenüber dem Umgebungsdruck aufgebaut werden kann.
Bei den Mitteln (25) zur Förderung der zweiten Flüssigkeit (25) aus dem zweiten Behälter (20) handelt es sich in Fig. 1 um eine elektrisch betriebene Pumpe.
Bei geöffnetem Ventil (40) wird die erste Flüssigkeit (11) mittels des Fördermittels (15) in Richtung Sprühdüse (30) gefördert. Der Fluss der ersten Flüssigkeit wird mittels Durchflussmesser (2) gemessen. Der Durchflussmesser (2) steht mit der Kontrolleinheit (1) in einer kommunikativen Verbindung (dargestellt durch die gestrichelte Linie). Der vom Durchflussmesser (2) gemessene Fluss wird an die Kontrolleinheit (1) übertragen. Die Kontrolleinheit (1) steht mit dem Mittel (25) zur Förderung der zweiten Flüssigkeit (21) in einer kommunikativen Verbindung (dargestellt durch die gestrichelte Linie). Die Kontrolleinheit (1) regelt den Fluss der zweiten Flüssigkeit (21) in Richtung Sprühdüse, so dass die erste Flüssigkeit und die zweite Flüssigkeit die Sprühdüse in Form einer Mischung (50) mit einem gleichbleibenden Mischungsverhältnis verlassen.

Figur 2 zeigt eine bevorzugte Ausführungsform des erfindungsgemäßen Sprühgeräts.
Das Sprühgerät umfasst eine Kontrolleinheit (1), einen Durchflussmesser (2), einen Drucksensor (3), einen ersten Behälter (10) mit einer ersten Flüssigkeit (11), einen zweiten Behälter (20) mit einer zweiten Flüssigkeit (21), eine erste Pumpe (15), eine zweite Pumpe (25), eine Sprühdüse (30) und ein Ventil (40).

Der erste Behälter (10) ist als flexibler Beutel ausgeführt, der eine Öffnung zum Einfüllen der ersten Flüssigkeit (11) umfasst, wobei die Öffnung durch einen Verschluss (12) reversibel verschlossen werden kann.
Der zweite Behälter (20) ist als austauschbare Kartusche ausgeführt. Die Kartusche wird über Anschlussmittel (22a) zum Anschließen der Kartusche an das Sprühgerät mit dem Sprühgerät verbunden. Das Sprühgerät weise zu den Anschlussmitteln (22a) kompatible Anschlussmittel (22b) auf.
Die Kontrolleinheit (1) steht in einer kommunikativen Verbindung (dargestellt durch gestrichelte Linien) mit dem Durchflussmesser (2), dem Druckmesser (3), der ersten Pumpe (15) und der zweiten Pumpe (25). Die Pumpen (15, 25) werden elektrisch betrieben.
Bei geöffnetem Ventil (40) wird die erste Flüssigkeit (11) aus dem ersten Behälter (10) mittels der ersten Pumpe (15) in Richtung Sprühdüse (30) gefördert. Mittels des Durchflussmessers (2) wird dieser Fluss der ersten Flüssigkeit (11) gemessen. Der Messwert wird an die Kontrolleinheit (1) übertragen. Gleichzeitig wird der Druck in der Zuleitung zur Sprühdüse (30) mittels des Drucksensors (3) gemessen. Dieser Messwert wird ebenfalls an die Kontrolleinheit (1) übermittelt. Die Kontrolleinheit (1) regelt über die erste Pumpe (15) und über die zweite Pumpe (25) den Fluss der ersten Flüssigkeit (11) und der zweiten Flüssigkeit (21) in Richtung Sprühdüse (30) so, dass die austretende Mischung (50) ein gleichbleibendes Mischverhältnis an erster und zweiter Flüssigkeit aufweist, und so, dass der Druck in der Zuleitung vor der Sprühdüse innerhalb eines vorgegebenen Bereichs liegt.

## Patentansprüche

1. Transportables Sprühgerät, umfassend
- einen ersten Behälter zur Aufnahme einer ersten Flüssigkeit,
- Mittel zum Anschluss eines zweiten Behälters mit einer zweiten Flüssigkeit an das Sprühgerät,
- eine Sprühdüse,
- Mittel zur Förderung der ersten und der zweiten Flüssigkeit aus ihren Behältern in Richtung Sprühdüse,
- einen Durchflussmesser zur Messung des Flusses der ersten Flüssigkeit aus dem ersten Behälter in Richtung der Sprühdüse,
- und eine Kontrolleinheit,
**dadurch gekennzeichnet, dass** die Kontrolleinheit den Fluss der zweiten Flüssigkeit in Richtung der Sprühdüse auf Basis des gemessenen Flusses der ersten Flüssigkeit regelt.

2. Sprühgerät nach Anspruch 1, **dadurch gekennzeichnet, dass** es sich bei den Mitteln zur Förderung der zweiten Flüssigkeit um eine elektrisch betriebene Pumpe handelt.

3. Sprühgerät nach einem der Ansprüche 1 oder 2, **dadurch gekennzeichnet, dass** die Sprühdüse austauschbar ist.

4. Sprühgerät nach einem der Ansprüche 1 bis 3, umfassend einen Drucksensor, der den Druck in einer Zuleitung zur Sprühdüse misst.

5. Sprühgerät nach Anspruch 4, **dadurch gekennzeichnet, dass** der Drucksensor mit der Kontrolleinheit verbunden ist und die Kontrolleinheit den Druck vor der Sprühdüse beim Sprühvorgange in einem vordefiniertem Bereich konstant hält.

6. Sprühgerät nach einem der Ansprüche 1 oder 5, umfassend einen zweiten Behälter.

7. Sprühgerät nach Anspruch 6, **dadurch gekennzeichnet, dass** es sich bei dem zweiten Behälter um einen austauschbaren Behälter handelt.

8. Sprühgerät nach einem der Ansprüche 5 bis 7, **dadurch gekennzeichnet, dass** die zweite Flüssigkeit ein Konzentrat, vorzugsweise eine Wirkstoff-Konzentrat ist und die erste Flüssigkeit ein Verdünnungsmittel zum Verdünnen des Konzentrats, vorzugsweise Wasser ist.

9. Verfahren zur Applikation einer Mischung aus einer ersten und einer zweiten Flüssigkeit mittels eines tragbaren Sprühgeräts umfassend einen ersten Behälter, eine Sprühdüse und ein Ventil auf ein Zielobjekt, wobei das Verfahren die folgenden Schritte umfasst:
- Füllen des ersten Behälters mit der ersten Flüssigkeit,
- Anschließen eines zweiten Behälters mit der zweiten Flüssigkeit an das Sprühgerät,
- Richten der Sprühdüse auf das Zielobjekt,
- Öffnen des Ventils, und
- Applizieren der Mischung,
wobei bei Öffnen des Ventils die erste Flüssigkeit aus dem ersten Behälter in Richtung Sprühdüse gefördert wird, der Fluss der ersten Flüssigkeit mittels eines Durchflussmesser gemessen und an eine Kontrolleinheit übertragen wird, die Kontrolleinheit den Fluss der zweiten Flüssigkeit aus dem zweiten Behälter in Richtung der Sprühdüse regelt, so dass die erste und die zweite Flüssigkeit in einem konstanten Mischungsverhältnis durch die Sprühdüse treten.

10. Verfahren nach Anspruch 9, wobei die zweite Flüssigkeit mit einer elektrisch betriebenen Pumpe gefördert wird.

11. Verfahren nach einem der Ansprüche 9 oder 10, **dadurch gekennzeichnet, dass** die zweite Flüssigkeit ein Konzentrat, vorzugsweise eine Wirkstoff-Konzentrat ist und die erste Flüssigkeit ein Verdünnungsmittel zum Verdünnen des Konzentrats, vorzugsweise Wasser ist.

12. Verfahren nach einem der Ansprüche 9 bis 11, **dadurch gekennzeichnet, dass** vor der Sprühdüse ein Drucksensor angebracht ist, der den Druck in einer Zuleitung zur Sprühdüse misst und die Kontrolleinheit den Fluss der ersten und/oder der zweiten Flüssigkeit so einstellt, dass der Druck innerhalb eines vordefinierten Bereichs liegt.
